# EUROPÄISCHE PATENTSCHRIFT

(11) **EP 0 826 915 B1**
(45) Veröffentlichungstag und Bekanntmachung des Hinweises auf die Patenterteilung: **03.04.2002**
(21) Anmeldenummer: 97110740.4
(22) Anmeldetag: 01.07.1997
(51) Int. Cl.: F16L 11/12, F16L 11/08

(54) **Kraftstoffschlauch**
Fuel hose
Tuyau pour carburant

(30) Priorität: 30.08.1996 DE 19635296
(43) Veröffentlichungstag der Anmeldung: 04.03.1998
(73) Patentinhaber: Mündener Gummiwerk GmbH, 34346 Hann. Münden (DE)
(72) Erfinder: Meister, Burkhard, Dr., D-21149 Hamburg (DE); Möller, Thilo, D-34346 Hann.Münden (DE); Stracke, Karl-Heinz, D-34346 Hann.Münden (DE)
(74) Vertreter: WALTHER, WALTHER & HINZ Patentanwälte

(56) Entgegenhaltungen:
- EP-A- 0 582 301
- EP-A- 0 824 059
- US-A- 4 942 906

## Beschreibung

Die Erfindung betrifft einen Kraftstoffschlauch mit einer Innenschicht aus einem Fluorplasik, einer darauf aufgebauten Zwischenschicht aus einem Elastomerwerkstoff, einem auf der Zwischenschicht aufliegenden Festigkeitsträger und einer Außenschicht.

Kraftstoffschläuche werden vielfach im Automobilbau eingesetzt. Übliche Kraftstoffschläuche haben eine relativ hohe Permeationsrate für Kraftstoff; das heißt, daß Kraftstoff in erheblichem Maße durch die Schläuche hindurchtritt. So sind zum Beispiel Kraftstoffschläuche bekannt, die eine Innenschicht aus einem Nitrilkautschuk aufweisen und aus einem Festigkeitsträger aus einem Kunststoffgarn oder einem Garn aus einem Naturprodukt, zum Beispiel Baumwolle, und einer Deckschicht aus einem Chloropren bestehen, wobei derartige Schläuche eine Permeationsrate im Bereich von 400 g/m² / 24 h / 23°C aufweisen. Aufgrund verschärfter Emissionsgesetze sind derartige Schläuche, die zwar preiswert und einfach im Aufbau sind, nicht mehr verwendbar. Nach den neuesten Vorschriften soll nur noch eine Permeationsrate von 10 g/m²/24 h / 23°C erlaubt sein. Es sind allerdings bereits Kraftstoffschläuche bekannt, die diesen Anforderungen genügen. Ein solcher Kraftstoffschlauch zeichnet sich durch eine innenliegende Sperrschicht aus einem Fluorelastomer aus, einer Zwischenschicht aus Epichlorhydrin-Kautschuk, einem Festigkeitsträger und einer Deckschicht aus ebenfalls einem Epichlorhydrin-Kautschuk. Die Permeationsrate bei einem solchen Schlauchaufbau beträgt etwa 1 bis 8 g/m² / 24 h / 23°C.

Der Nachteil eines derart aufgebauten Schlauches liegt jedoch in dem sehr hohen Preis des Fluorkautschuks begründet, wodurch der Preis eines derartigen Kraftstoffschlauches in etwa das Dreifache von dem beträgt, was ein Kraftstoffschlauch mit herkömmlichen Aufbau kostet.

Aus der US-A 4 942 906 ist ein Verfahren zur Herstellung eines Kraftstoffschlauches bekannt, bei dem auf einem Dorn eine Fluorplastikschicht aufextrudiert wird, wobei die Zwischenschicht auf diese Schicht aufextrudiert wird. Darauf wird der Festigkeitsträger aufgebracht, der von einer Außenschicht aus einem Elastomer umgeben ist. Anschließend wird der Schlauch vulkanisiert.

Die EP-A1 824 059 beschreibt einen permeationsarmen Kraftstoffschlauch, der durch Extrusion auf einen Dorn mit anschließender Vulkanisation hergestellt wird. Permeationsarm ist der Schlauch durch einen Inliner aus Tetafluoräthylen-Hexafluorpropylen-Vinylidenfluorid.

Aus der EP-A1 582 301 ist ein Schlauch der eingangs genannten Art bekannt. Dieser Schlauch zeigt eine äußere Schicht aus ECO, wie sich dies aus Tabelle 1 zu dieser Schrift ergibt. ECO hat den Nachteil, dass dieses Material nur bis 120° hitzebeständig ist, und darüber hinaus, zur Erzielung der erforderlichen Diffusionsdichtigkeit für Kraftstoff, Blei aufweist. Insbesondere beim Recyceln stellen derartig bleihaltige Schläuche ein erhebliches Problem dar.

Der Erfindung liegt daher die Aufgabe zu Grunde einen Kraftstoffschlauch der eingangs genannten Art bereitzustellen, der über eine wesentlich höhere Wärmebeständigkeit verfügt, als ein Schlauch nach dem Stand der Technik, und der darüber hinaus besser recycelbar ist.

Die Aufgabe wird erfindungsgemäß durch einen Kraftstoffschlauch gelöst, der eine Außenschicht aus Äthylenacrylatkautschuk (AEM) aufweist. Ein derartiger Kraftstoffschlauch weist eine Wärmebeständigkeit bis ca. 160° auf.

Ein Fluorplastik ist wesentlich preisgünstiger als ein Fluorkautschuk, weshalb auch ein entsprechend aufgebauter Kraftstoffschlauch mit einer Innenschicht aus Fluorplastik wesentlich günstiger im Preis ist. Daher rührt insbesondere auch, daß die Innenschicht lediglich eine Stärke von 0,1 bis 0,2 mm aufweisen muß, um unter der von der neuen DIN vorgegebenen Permeationsrate bleiben zu können.

Nach einem besonderen Merkmal besteht hierbei die Zwischenschicht aus einem Elastomer, der Festigkeitsträger weist Fäden aus Kunststoff oder einem Naturstoff, beispielsweise in Form eines Gewebes, Gewirkes oder Gestrickes auf. Nach der Vulkanisation des derart aufgebauten Schlauchrohlings wird der Schlauch mit Wasserdruck von dem Dorn entfernt und der Schlauch ist fertig. Ein derartiger Schlauch weist eine Permeationsrate von etwa 1 bis 6 g/m² / 24 h / 23°C auf.

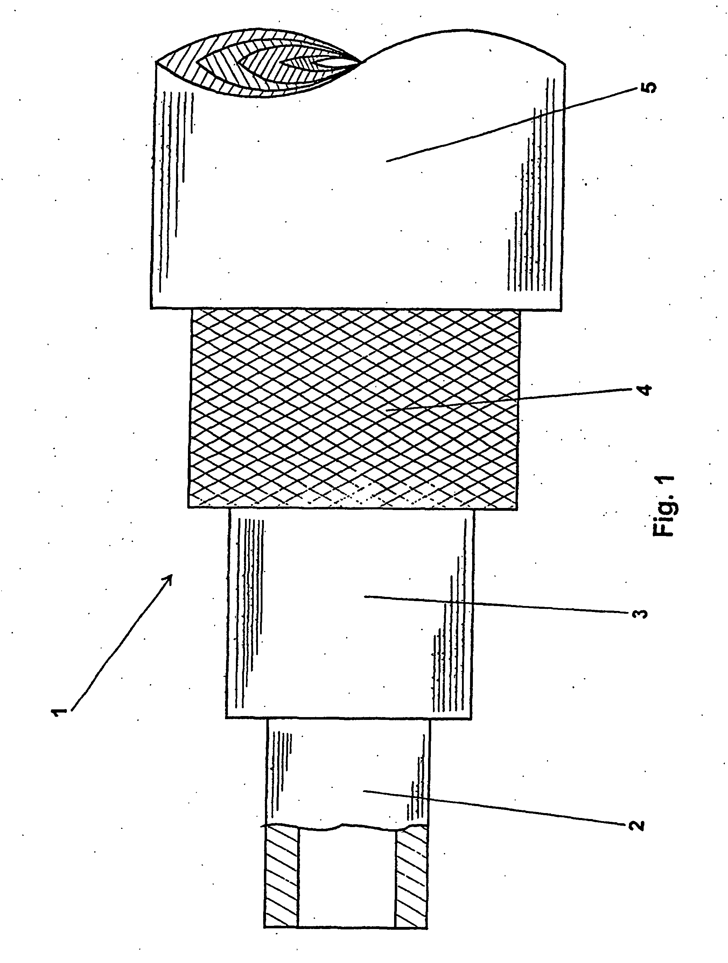

Anhand der Zeichnung wird die Erfindung nachstehend beispielhaft näher erläutert.

Der Kraftstoffschlauch 1 besteht aus einer innenliegenden Sperrschicht 2 aus Fluorplastik, die von einer Zwischenschicht 3 aus einem Elastomer (Epichlorhydrin-Kautschuk) umgeben ist. Diese Zwischenschicht 2 ist durch eine Festigkeitsschicht 4 ummantelt. Die Festigkeitsschicht 4 besteht aus einem Gewebe, Gewirke oder Gestricke, beispielsweise aus Kunststofffäden, wobei diese Festigkeitsschicht von einer Außenschicht aus Äthylenacrylat-Kautschuk umgeben ist.

## Patentansprüche

1. Kraftstoffschlauch (1) mit einer Innenschicht (2) aus einem Fluorplastik, einer darauf aufgebauten Zwischenschicht (3) aus einem Elastomerwerkstoff, einem auf der Zwischenschicht aufliegenden Festigkeitsträger (4) und einer Außenschicht (5),
**dadurch gekennzeichnet,**
**daß** die die Außenschicht (5) einen Werkstoff aus Äthylenacrylatkautschuk (AEM) aufweist.

2. Kraftstoffschlauch (1) nach Anspruch 1,
**dadurch gekennzeichnet,**
**daß** die Innenschicht (2) eine Stärke von 0,1 bis 0,2 mm aufweist.

3. Kraftstoffschlauch (1) nach einem der voranstehenden Ansprüche, **dadurch gekennzeichnet,**
**daß** die Zwischenschicht (3) einen Elastomer-Werkstoff aufweist.

4. Kraftstoffschlauch (1) nach einem der voranstehenden Ansprüche,
**dadurch gekennzeichnet,**
**daß** der Festigkeitsträger (4) Fäden aus Kunststoff oder einem Naturprodukt, z. B. Baumwolle, aufweist.

5. Kraftstoffschlauch (1) nach Anspruch 1,
**dadurch gekennzeichnet,**
**daß** der Festigkeitsträger (4) ein Gewebe, ein Gestricke oder ein Gewirke aufweist.

## Claims

1. A fuel hose (1) with an inner layer (2) of a fluoroplastic, with an intermediate layer (3) made from an elastomeric material applied thereon, with a strength carrier (4) resting on said intermediate layer and with an outer layer (5)
**characterized in that**
the outer layer (5) is provided with a material made from ethylene acrylate rubber (AEM).

2. The fuel hose (1) of claim 1,
**characterized in that**
the inner layer (2) has a thickness of 0.1 to 0.2 mm.

3. The fuel hose (1) of one of the afore mentioned claims,
**characterized in that**
the intermediate layer (3) is provided with an elastomeric material.

4. The fuel hose (1) of one of the afore mentioned claims,
**characterized in that**
the strength carrier (4) is provided with threads made of a synthetic material or of a natural product, such as cotton for example.

5. The fuel hose (1) of claim 1,
**characterized in that**
the strength carrier (4) is provided with a woven or knitted fabric.

## Revendications

1. Tuyau pour carburant (1) avec une couche intérieure (2) en un plastique fluoré, avec une couche intermédiaire (3) en un matériau élastomère appliquée sur ladite couche intérieure, avec une armature (4) reposant sur la couche intermédiaire et avec une couche extérieure (5),
**caractérisé en ce que**
la couche extérieure (5) est pourvue d'un matériau en caoutchouc d'acrylate d'éthylène (AEM).

2. Tuyau pour carburant (1) selon la revendication 1,
**caractérisé en ce que**
la couche intérieure (2) a une épaisseur de 0,1 à 0,2 mm.

3. Tuyau pour carburant (1) selon l'une des revendications précédentes,
**caractérisé en ce que**
la couche intermédiaire (3) est pourvue d'un matériau en élastomère.

4. Tuyau pour carburant (1) selon l'une des revendications précédentes,
**caractérisé en ce que**
l'armature (4) est pourvue de fils en matière synthétique ou en un produit naturel, en coton par exemple.

5. Tuyau pour carburant (1) selon la revendication 1,
**caractérisé en ce que**
l'armature (4) est pourvue d'un tissage, d'une texture ou d'un tricot.
